# EUROPEAN PATENT APPLICATION

(11) **EP 4 736 683 A1**
(43) Date of publication of application: **06.05.2026**
(21) Application number: 23943660.3
(22) Date of filing: 29.06.2023
(51) Int. Cl.: A24F 40/50

(54) **AEROSOL GENERATION DEVICE**

(71) Applicant: Japan Tobacco Inc., Tokyo 105-6927 (JP)
(72) Inventor: AOYAMA, Tatsunari, Tokyo 130-8603 (JP); MINATO, Junji, Tokyo 130-8603 (JP); UCHIBORI, Tomoya, Tokyo 130-8603 (JP)
(74) Representative: Hoffmann Eitle
(86) International application number: PCT/JP2023/024178
(87) International publication number: WO 2025/004265

(57) **Abstract**

An aerosol-generating device comprising: a heating unit for heating a substrate containing an aerosol source; a first board connected to the heating unit; a control unit for controlling heating by the heating unit; a second board arranged facing the first board and having the control unit mounted thereon; and an electrically-conductive member which is provided between the first board and the second board and serves for connecting a ground of the first board with a ground of the second board, wherein at least one of the first board, the second board and the electrically-conductive member comprises an elastically deformable part.

## Description

### TECHNICAL FIELD

The present disclosure relates to an aerosol-generating device.

### BACKGROUND ART

PTL 1 describes an aerosol-generating device comprising: an aerosol generator; a power supply; a circuit board; and a heat conductive assembly comprising a first end in thermal contact with the circuit board and a second end spaced apart from the circuit board, wherein the circuit board is a first circuit board, wherein the aerosol-generating device further comprises a second circuit board, and wherein the first end of the heat conductive assembly is in thermal contact with the second circuit board; and wherein the second circuit board at least partially overlies the first circuit board, wherein the second circuit board is spaced apart from the first circuit board, and wherein the first end of the heat conductive assembly is positioned between the first circuit board and the second circuit board.

### CITATION LIST

### PATENT LITERATURE

PTL 1: JP 2022-535831 A

### SUMMARY OF INVENTION

### TECHNICAL PROBLEM

It is general practice to electrically connect different boards in an aerosol-generating device comprising a plurality of boards, but methods of connection have not been fully investigated.

The objective of the present disclosure lies in achieving more reliable electrical connections between different boards in an aerosol-generating device.

### SOLUTION TO PROBLEM

The present disclosure provides an aerosol-generating device comprising: a heating unit for heating a substrate containing an aerosol source; a first board connected to the heating unit; a control unit for controlling heating by the heating unit; a second board arranged facing the first board and having the control unit mounted thereon; and an electrically-conductive member which is provided between the first board and the second board and serves for connecting a ground of the first board with a ground of the second board, wherein at least one of the first board, the second board and the electrically-conductive member comprises an elastically deformable part.

The electrically-conductive member of the aerosol-generating device may comprise the elastically deformable part. In that case, a tip-end part of the electrically-conductive member may have greater elastic deformability than a part of the electrically-conductive member on a side connected to the first board or to the second board, and may deform so as to contract as a result of being pressed.
The electrically-conductive member may be provided on the first board.
The electrically-conductive member may be provided on the second board. In that case, the first board has a receptacle mounted thereon, a plug being inserted into the receptacle, and an exterior of the receptacle is connected to the ground of the first board. In that case, the receptacle may be a USB connector.
In that case, the electrically-conductive member may contact the exterior of the USB connector. In that case, the electrically-conductive member may contact a face of the exterior of the USB connector which faces the second board.
Furthermore, in that case, the aerosol-generating device may comprise a coupling member which couples the first board and the second board, and is bent so that the USB connector on the first board faces the electrically-conductive member on the second board. In that case, the coupling member may couple a face of the first board on the opposite side to the face on which the USB connector is mounted, and a face of the second board on the opposite side to the face on which the electrically-conductive member is provided. Furthermore, in that case, the coupling member may be connected to one end portion of the first board and to one end portion of the second board. In that case, the first board may have a shape including a long side and a short side, and the second board may have a shape including a long side and a short side, and said one end portion of the first board may constitute one end portion on the long side of the first board, and said one end portion of the second board may constitute one end portion on the long side of the second board.
Additionally, in that case, on the first board, the USB connector may be mounted in a region on said one end portion side, a heater connector for connecting the heating unit may be mounted in a region on said other end portion side, and a circuit associated with control of heating performed by the heating unit may be mounted in a region closer to the heater connector than to the USB connector. In that case, the circuit associated with control of heating performed by the heating unit may comprise a power source for heating by the heating unit, and a switch.

### ADVANTAGEOUS EFFECTS OF INVENTION

The present disclosure makes it possible to achieve more reliable electrical connections between different boards in an aerosol-generating device.

### BRIEF DESCRIPTION OF DRAWINGS

Fig. 1 is a diagram in which a front face side of an aerosol-generating device is viewed from diagonally above.
Fig. 2 is a diagram in which the front face side of the aerosol-generating device is viewed from diagonally below.
Fig. 3 is a diagram in which a main body device with a front panel removed is viewed from the front.
Fig. 4 shows an example of an internal configuration of the main body device which can be seen when the front panel is removed.
Fig. 5 is a diagram showing the schematic configuration of an electronic circuit of the main body device.
Fig. 6 is a diagram showing a first connection example of connection between an MCU board and a USB connector board.
Fig. 7 is a diagram showing a second connection example of connection between the MCU board and the USB connector board.
Fig. 8 is a diagram in which a coupling example of coupling between the MCU board and the USB connector board, etc. is viewed from a main face side.
Fig. 9 is a diagram in which a coupling example of coupling between the MCU board and the USB connector board, etc. is viewed from a secondary face side.
Fig. 10 is a diagram showing a first state example when the MCU board and the USB connector board are arranged facing each other.
Fig. 11 is a diagram showing a second state example when the MCU board and the USB connector board are arranged facing each other.
Fig. 12 is a diagram in which the USB connector board is viewed from the main face side.
Fig. 13 is a diagram in which the USB connector board is viewed from the secondary face side.

### DESCRIPTION OF EMBODIMENTS

Embodiments relating to the present disclosure will now be described with reference to the drawings. In the drawings, identical parts are indicated by identical reference signs.

### Terms

An aerosol-generating device according to each embodiment is a form of electronic cigarette.
In the following description, a substance generated by the aerosol-generating device will be referred to as an aerosol. An aerosol refers to a mixture of minute liquid or solid particles suspended in a gas, and air or another gas.
The embodiments describe aerosol-generating devices which generate the aerosol without associated burning.
Moreover, inhalation of the aerosol generated by the aerosol-generating device will also be referred to as a "puff".
In each embodiment, an aerosol-generating device to which it is possible to attach a solid aerosol source is described. It should be noted that a container for accommodating the solid aerosol source will be referred to as both a "capsule" and a "stick-type substrate", depending on the form of product. Capsules and stick-type substrates are consumables. Capsules and stick-type substrates therefore have fixed criteria for replacement.

### Embodiment 1

### Example of external appearance

An example of the external appearance of an aerosol-generating device used in Embodiment 1 will first be described.

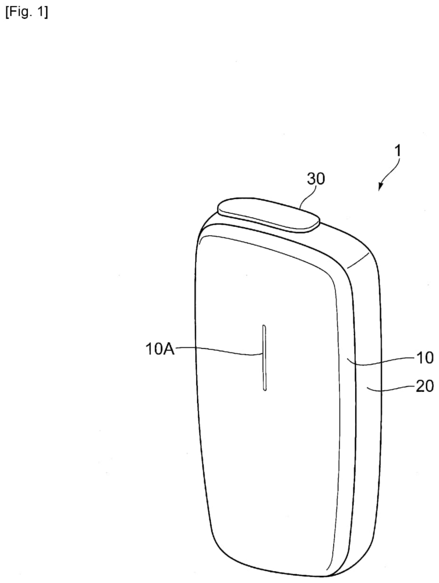

Fig. 1 is a diagram in which a front face side of an aerosol-generating device 1 is viewed from diagonally above.

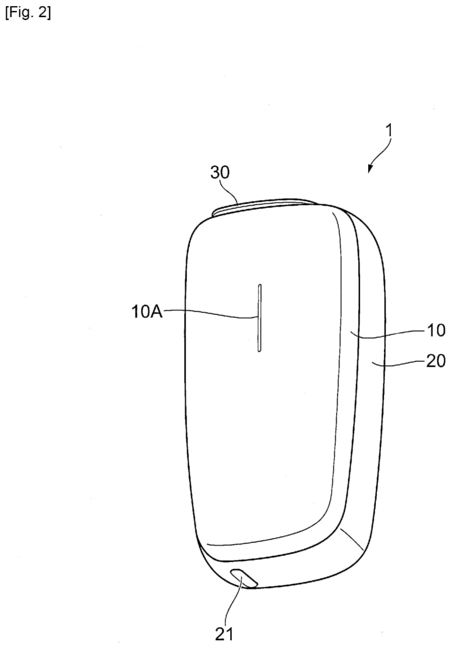

Fig. 2 is a diagram in which the front face side of the aerosol-generating device 1 is viewed from diagonally below.

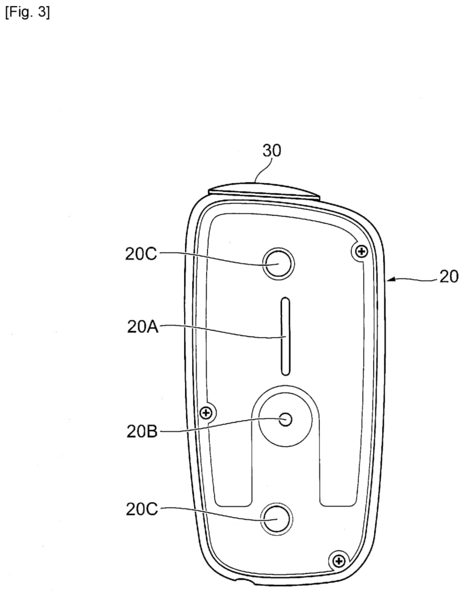

Fig. 3 is a diagram in which a main body device 20 with a front panel 10 removed is viewed from the front.

The aerosol-generating device 1 used in this embodiment has a size such that a user can hold it in one hand. The aerosol-generating device 1 comprises: a main body device 20; a front panel 10 attached to a front face of the main body device 20; and a shutter 30 which is disposed on an upper face of the main body device 20 and can be slidably operated along the upper face.
The front panel 10 is a member which is detachable from the main body device 20. The front panel 10 is attached/detached by the user.

The front panel 10 attached to the main body device 20 covers a front face part of the main body device 20, as shown in fig. 1 and 2. In other words, parts of the main body device 20 other than the front face part can also be seen from the outside after the front panel 10 has been attached. For example, side faces, a back face, an upper face, and a bottom face of the main body device 20 can also be seen from the outside after the front panel 10 has been attached.

The front panel 10 is provided with a window 10A. The window 10A is provided at a position facing a light-emitting element on the main body device 20 side. In Embodiment 1, the LEDs (=light-emitting diodes) 20A shown in fig. 3 are used as the light-emitting element. In Embodiment 1, eight LEDs 20A are provided in the main body device 20.
The window 10A in Embodiment 1 is formed by a light-transmissive material. However, the window 10A may equally be a slit that penetrates from a front surface to a rear surface.

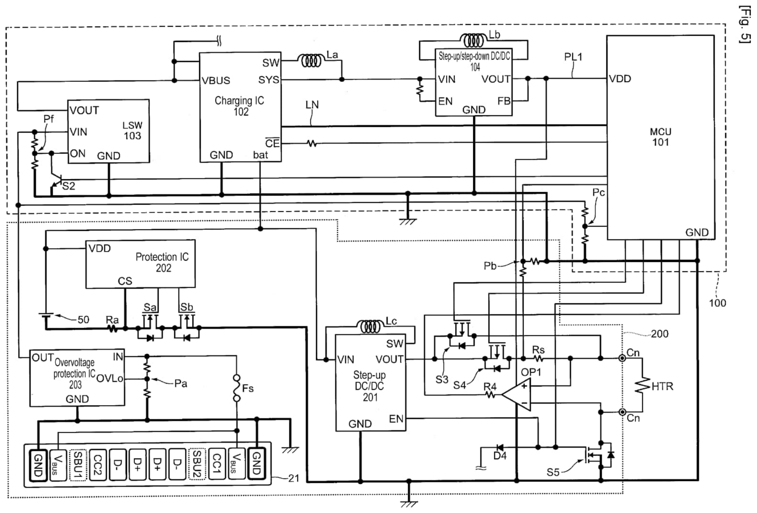

States of operation of the aerosol-generating device are assigned to patterns of illumination or flashing of the LEDs 20A. For example, states associated with heating of the aerosol source are assigned to illumination or flashing of the LEDs 20A. States associated with heating of the aerosol source include, for example, completion of preparation for heating of the aerosol source, start of heating, completion or termination of heating, number of aerosol sources available for inhalation, remaining time available for inhalation, and abnormality in the main body temperature. In addition, the occurrence of a failure or malfunction of the main body device 20, remaining battery capacity, charging or completion of charging, or pairing status, for example, are assigned to illumination or flashing of the LEDs 20A. Malfunctions as referred to here also include abnormalities relating to ambient temperature. Illumination and flashing of the light-emitting element are controlled by an MCU 101 (see fig. 5) which will be described later.

The front panel 10 also has the role of a buffer against the propagation of heat released from the main body device 20, etc. In the case of this embodiment, the generation of aerosol is permitted only when the front panel 10 is attached to the main body device 20.
The front panel 10 used in this embodiment deforms when a position below the window 10A is pressed by the user's fingertip, and the original shape is restored when the user stops pressing. This deformation allows a power button 20B provided in the main body device 20 to be operated while the front panel 10 remains attached to the main body device 20.

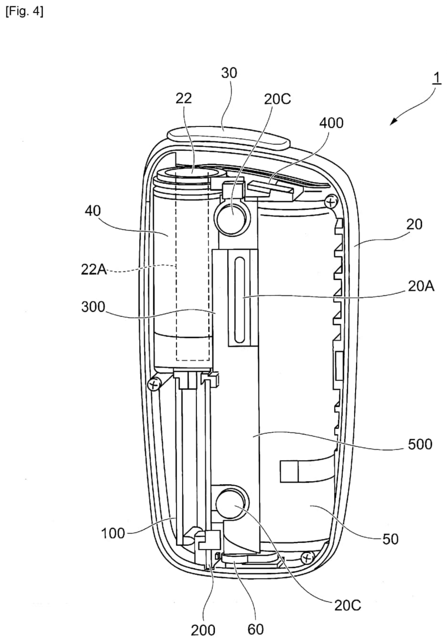

A type C USB (= universal serial bus) connector 21 is provided on the bottom face side of the main body device 20. The shape and type of USB connector 21 are given by way of example. In Embodiment 1, the USB connector 21 is used for charging a battery 50 (see fig. 4) built into the main body device 20. Furthermore, a USB is also merely an example. A receptacle and a plug that are compliant with another standard may be used, but the following description will be given taking the exemplary case of using a USB connector 21 and a USB plug.

An insertion hole 22 (see fig. 4) for insertion of a stick-type substrate accommodating an aerosol source is provided in an upper face portion of the main body device 20. The insertion hole 22 is exposed by sliding the shutter 30 to an open position, and is hidden by sliding the shutter 30 to a closed position.
The stick-type substrate used in this embodiment has a structure in which a solid aerosol source is accommodated in a substantially cylindrical paper tube.

A magnet, for example, is attached to a rear face of the shutter 30. Meanwhile, a Hall IC is attached to the main body device 20 in a movable range of the shutter 30.
The Hall IC is a magnetic sensor formed by a Hall element and an operational amplifier, etc., and outputs a voltage corresponding to the intensity of a magnetic field passing across the Hall element.
In this embodiment, opening and closing of the shutter 30 is sensed from a change in the voltage output from the Hall IC accompanying sliding of the shutter 30. That is to say, it is sensed whether the shutter 30 is at the closed position or the open position.

As shown in fig. 3, the power button 20B is disposed substantially in the center of the front face of the main body device 20. As indicated above, the power button 20B can be operated while the front panel 10 remains attached.
The power button 20B is used, for example, for turning the power source of the main body device 20 on and off, for turning the power supply to a heater unit 40 (see fig. 4) that heats the aerosol source on and off, and for Bluetooth (registered trademark) pairing commands, etc.
Moreover, a reset function is performed by a long press (e.g., pressing for 5 seconds or more) of the power button 20B while the front panel 10 is removed from the main body device 20.
BLE (= Bluetooth low energy) is used as Bluetooth in this embodiment.

As shown in fig. 3, magnets 20C used for attaching the front panel 10 are disposed on the upper portion and lower portion of the front face of the main body device 20. The magnets 20C are provided in positions facing magnets (not shown) provided on the inner side of the front panel 10. If the magnets on the front panel 10 are N poles, for example, the magnets 20C on the main body device 20 side are S poles. The front panel 10 is detachably attached to the main body device 20 by the force of attraction of the magnets.

It should be noted that either the magnets on the front panel 10 side or the magnets 20C on the main body device 20 side may be metal pieces made of iron or another magnetic metal. Incidentally, attachment of the front panel 10 to the main body device 20 is sensed by means of the Hall IC provided on the main body device 20 side.
Various other types of electronic components required for generating an aerosol are built into the main body device 20. In Embodiment 1, a device configuration in which the front panel 10 is attached to the main body device 20 has been described as the aerosol-generating device 1, but in a narrow sense, the main body device 20 is referred to as an aerosol-generating device.

### Internal configuration example

Fig. 4 shows an example of the internal configuration of the main body device 20 which can be seen when the front panel 10 is removed.

The heater unit 40, the battery 50, an MCU (= Micro Control Unit) board 100, a USB connector board 200, an LED board 300, a Hall IC board 400, a vibrator 60, and a chassis 500 to which the above members are attached are provided inside the main body device 20 of Embodiment 1. That is, four separate boards are provided within the main body device 20. The four boards are spaced apart from each other.

The heater unit 40 is a unit for heating a stick-type substrate inserted into the insertion hole 22. The insertion hole 22 is defined as a space surrounded by an inner wall of a cylindrical container 22A.
The container 22A used in Embodiment 1 has a bottom. However, a container 22A without a bottom may equally be used.
The container 22A used in Embodiment 1 has a flat portion on a side wall thereof. In other words, a flat portion is provided in a cross section when the container 22A is cut on a plane orthogonal to the axis of the container 22A.

The flat portion compresses and deforms the side face of the stick-type substrate inserted into the opening of the insertion hole 22, thereby improving heating efficiency. It should be noted that the cross-sectional shape may be substantially circular, substantially elliptical, or substantially polygonal. Further, the cross-sectional shape may be completely the same from the opening side to the bottom face, or may vary between the opening side and the bottom face.

The container 22A is preferably made of a metal having high thermal conductivity. In the case of Embodiment 1, the container 22A is formed by stainless steel, for example.
A film-like heater HTR (see fig. 5) is disposed on the outer periphery of the container 22A to cover the outer peripheral surface. The heater HTR generates heat by consuming power supplied from the battery 50. When the heater HTR generates heat, the stick-type substrate is heated from the outer periphery, and an aerosol is generated.

The heater unit 40 is connected to a heater connector Cn (see fig. 5) provided on the USB connector board 200 and receives a supply of power.
The heater unit 40 is an example of a heating unit for heating a substrate containing an aerosol source.

The battery 50 is a power source for supplying power required for operation of circuit units built into the main body device 20. In Embodiment 1, a lithium ion secondary battery or the like which can be repeatedly charged is used as the battery 50. Power from the battery 50 is supplied to each part through power supply lines that are connected to a negative electrode and a positive electrode, which are not shown.

The MCU board 100 is a board on which the MCU 101, which controls the operation of the entire device, and the like are mounted. The MCU 101 is what is known as a controller. The operation of the MCU 101 is defined through the execution of firmware or a program running on the firmware. In particular, the MCU 101 controls heating performed by the heater unit 40. The MCU 101 is an example of a control unit for controlling heating performed by the heating unit, and the MCU board 100 is an example of the second board on which the control unit is mounted.

The USB connector board 200 is a board on which the USB connector 21 is mounted. The USB connector 21 in this embodiment is used to receive a supply of power from an external power source via a USB cable. Furthermore, the heater connector Cn and the like are also mounted on the USB connector board 200. The heater connector Cn is used to supply power to the heater unit 40.
The USB connector board 200 is an example of the first board connected to the heating unit. Furthermore, the USB connector board 200 is an example of the first board on which a receptacle is mounted, a plug being inserted into the receptacle, and is an example of the first board on which the USB connector is mounted

The LED board 300 is a board on which the LEDs 20A are mounted. The LEDs 20A are arranged in a row on the LED board 300. There are eight LEDs 20A in Embodiment 1, but the number of LEDs 20A is not shown explicitly in fig. 4. Moreover, the number of LEDs 20A and the arrangement thereof on the LED board 300 can be changed as desired.
The Hall IC board 400 is a board on which the Hall IC that senses opening and closing of the shutter 30 is mounted.
The vibrator 60 is a device that vibrates to notify the user of various information relating to the aerosol-generating device 1 through the case of the main body device 20.

### Outline of electronic circuit

Fig. 5 is a diagram showing the schematic configuration of an electronic circuit of the main body device 20. It should be noted that in fig. 5, only the main electronic components of the MCU board 100 and the USB connector board 200 are depicted, and depictions of the LED board 300 and the Hall IC board 400 are omitted.

The wiring shown with thick solid lines in fig. 5 is wiring (wiring connected to the ground provided in the main body device 20) that has the same potential as a reference potential (ground potential) of the main body device 20, and will be referred to below as ground lines. In fig. 5, electronic components in which a plurality of circuit elements are arranged in the form of a chip are shown as rectangles, and the reference signs of various terminals are depicted inside the rectangle. The power supply terminal VCC and the power supply terminal VDD mounted on the chips each indicate high-potential-side power supply terminals. The power supply terminal VSS and the ground terminal GND mounted on the chips each indicate low-potential-side (reference-potential-side) power supply terminals. In the electronic components formed as chips, the difference between the potential of the high-potential-side power supply terminal and the potential of the low-potential-side power supply terminal is the power supply voltage. The electronic components formed as chips use the power supply voltage to perform various functions.

The MCU board 100 is provided with: the MCU 101 for overall control of the aerosol-generating device 1 as a whole; a charging IC 102 for controlling charging of the battery 50; a load switch (hereinafter referred to as LSW) 103 comprising a combination of capacitors, resistors, transistors, etc.; a step-up/step-down DC/DC converter 104 (shown in the drawing as "step-up/step-down DC/DC 104"); and a voltage divider circuit Pc for detecting USB connection.

The ground terminals GND of each of the charging IC 102, the LSW 103 and the step-up/step-down DC/DC converter 104 are connected to the ground lines.

The USB connector board 200 is provided, as main electronic components, with: a power supply connector which is electrically connected to the battery 50 (in the drawing, the battery 50 connected to the power supply connector is shown); a step-up DC/DC converter 201 (shown as "step-up DC/DC 201" in the drawing); a protection IC 202; an overvoltage protection IC 203; the USB connector 21; switches S3 to S5 formed using MOSFETs; an operational amplifier OP1; and a pair of (positive-electrode-side and negative-electrode-side) heater connectors Cn which are electrically connected to the heater HTR.

The two ground terminals GND of the USB connector 21, the ground terminal GND of the step-up DC/DC converter 201, the ground terminal GND of the overvoltage protection IC 203, and the negative power supply terminal of the operational amplifier OP1 are each connected to a ground line.

### Details of electronic circuit

The connection relationships, etc., between the electronic components will be described below with reference to fig. 5.

The two power supply input terminals V_{BUS} of the USB connector 21 are connected to the input terminal IN of the overvoltage protection IC 203 via a protective element such as a fuse Fs. When a USB plug is connected to the USB connector 21 and a USB cable including the USB plug is connected to an external power source, a USB voltage V_{USB} is supplied to the two power supply input terminals V_{BUS} of the USB connector 21.

The input terminal IN of the overvoltage protection IC 203 is connected to one end of a voltage divider circuit Pa comprising a series circuit of two resistors. The other end of the voltage divider circuit Pa is connected to the ground line. The connection point of the two resistors that constitute the voltage divider circuit Pa is connected to a voltage detection terminal OVLo of the overvoltage protection IC 203. When the voltage input to the voltage detection terminal OVLo is less than a threshold, the overvoltage protection IC 203 outputs the voltage input to the input terminal IN from the output terminal OUT. When the voltage input to the voltage detection terminal OVLo is equal to or greater than the threshold (overvoltage), the overvoltage protection IC 203 stops the voltage output from the output terminal OUT (interrupts the electrical connection between the LSW 103 and the USB connector 21), thereby protecting the electronic components downstream of the overvoltage protection IC 203. The output terminal OUT of the overvoltage protection IC 203 is connected to the input terminal of VIN of the LSW 103 and to one end of the voltage divider circuit Pc (a series circuit of two resistors) connected to the MCU 101. The other end of the voltage divider circuit Pc is connected to the ground line. The connection point of the two resistors constituting the voltage divider circuit Pc is connected to the MCU 101.

One end of a voltage divider circuit Pf comprising a series circuit of two resistors is connected to the input terminal VIN of the LSW 103. The other end of the voltage divider circuit Pf is connected to the ground line. The connection point of the two resistors constituting the voltage divider circuit Pf is connected to a control terminal ON of the LSW 103. The control terminal ON of the LSW 103 is connected to a collector terminal of a bipolar transistor S2. An emitter terminal of the bipolar transistor S2 is connected to the ground line. A base terminal of the bipolar transistor S2 is connected to the MCU 101. When the level of a signal input to the control terminal ON becomes high, the LSW 103 outputs the voltage input to the input terminal VIN from the output terminal VOUT. The output terminal VOUT of the LSW 103 is connected to the input terminal VBUS of the charging IC 102. The MCU 101 turns on the bipolar transistor S2 while there is no USB connection. As a result, the control terminal ON of the LSW 103 is connected to the ground line via the bipolar transistor S2, and a low-level signal is input to the control terminal ON of the LSW 103.

The bipolar transistor S2 connected to the LSW 103 is turned off by the MCU 101 when a USB connection is made. When the bipolar transistor S2 is turned off, the USB voltage V_{USB} divided by the voltage divider circuit Pf is input to the control terminal ON of the LSW 103. Therefore, when a USB connection is made and the bipolar transistor S2 is turned off, a high-level signal is input to the control terminal ON of the LSW 103. As a result, the LSW 103 outputs the USB voltage V_{USB} supplied from the USB cable from the output terminal VOUT. It should be noted that, even if a USB connection is made while the bipolar transistor S2 not turned off, since the control terminal ON of the LSW 103 is connected to the ground line via the bipolar transistor S2, a low-level signal continues to be input to the control terminal ON of the LSW 103 unless the MCU 101 turns off the bipolar transistor S2.

The positive terminal of the battery 50 is connected to the power supply terminal VDD of the protection IC 202, the input terminal VIN of the step-up DC/DC converter 201, and the charging terminal bat of the charging IC 102. Therefore, the power supply voltage V_{BAT} of the battery 50 is supplied to the protection IC 202, the charging IC 102, and the step-up DC/DC converter 201. A resistor Ra, a switch Sa formed by a MOSFET, and a switch Sb formed by a MOSFET are connected in series to the negative terminal of the battery 50 in the stated order. A current detection terminal CS of the protection IC 202 is connected to the connection point between the resistor Ra and the switch Sa. The control terminals of the switch Sa and the switch Sb are connected to the protection IC 202.

The protection IC 202 acquires the value of the current flowing through the resistor Ra during charging or discharging of the battery 50, from the voltage input to the current detection terminal CS, and, if this current value becomes excessively large (in the case of an overcurrent), controls opening and closing of the switch Sa and the switch Sb to stop the charging or discharging of the battery 50, thereby protecting the battery 50. More specifically, the protection IC 202 stops the charging of the battery 50 by turning off the switch Sb if an excessively large current value is acquired when the battery 50 is being charged. The protection IC 202 stops the discharging of the battery 50 by turning off the switch Sa if an excessively large current value is acquired when the battery 50 is being discharged. In addition, when the voltage value of the battery 50 becomes abnormal (in the case of a charging overcurrent or a discharging overcurrent), on the basis of the voltage input to the power supply terminal VDD, the protection IC 202 controls the opening and closing of the switch Sa and the switch Sb to stop the charging or discharging of the battery 50, thereby protecting the battery 50. More specifically, the protection IC 202 stops the charging of the battery 50 by turning off the switch Sb if a charging overcurrent of the battery 50 is sensed. The protection IC 202 stops the discharging of the battery 50 by turning off the switch Sa if a discharging overcurrent of the battery 50 is sensed.

One end of a reactor Lc is connected to a switching terminal SW of the step-up DC/DC converter 201. The other end of the reactor LC is connected to the input terminal VIN of the step-up DC/DC converter 201. The step-up DC/DC converter 201 performs on/off control of a built-in transistor connected to the switching terminal SW, thereby stepping up the input voltage and outputting it from an output terminal VOUT. It should be noted that the input terminal VIN of the step-up DC/DC converter 201 constitutes the high-potential-side power supply terminal of the step-up DC/DC converter 201. The step-up DC/DC converter 201 performs the step-up operation when a signal input to an enable terminal EN is at a high level. In the USB connected state, the signal input to the enable terminal EN of the step-up DC/DC converter 201 may be controlled to a low level by the MCU 101. Alternatively, in the USB connected state, it is equally possible for the MCU 101 not to control the signal input to the enable terminal EN of the step-up DC/DC converter 201, thereby making the potential of the enable terminal EN indefinite.

The source terminal of a switch S4 formed by a P-channel MOSFET is connected to the output terminal VOUT of the step-up DC/DC converter 201. The gate terminal of the switch S4 is connected to the MCU 101. One end of a resistor Rs is connected to the drain terminal of the switch S4. The other end of the resistor Rs is connected to the positive-electrode-side heater connector Cn, which is connected to one end of the heater HTR. A voltage divider circuit Pb comprising two resistors is connected to the connection point between the switch S4 and the resistor Rs. The connection point of the two resistors constituting the voltage divider circuit Pb is connected to the MCU 101.

The source terminal of a switch S3 formed by a P-channel MOSFET is connected to a connection line between the output terminal VOUT of the step-up DC/DC converter 201 and the source terminal of the switch S4. The gate terminal of the switch S3 is connected to the MCU 101. The drain terminal of the switch S3 is connected to a connection line between the resistor Rs and the positive-electrode-side heater connector Cn. In this way, a circuit including the switch S3 and a circuit including the switch S4 and the resistor Rs are connected in parallel between the output terminal VOUT of the step-up DC/DC converter 201 and the positive electrode side of the heater connector Cn. The circuit including the switch S3 does not include a resistor and therefore has a lower resistance than the circuit including the switch S4 and the resistor Rs.

The non-inverting input terminal of the operational amplifier OP1 is connected to the connection line between the resistor Rs and the positive-electrode-side heater connector Cn. The inverting input terminal of the operational amplifier OP1 is connected to the negative-electrode-side heater connector Cn, which is connected to the other end of the heater HTR, and to the drain terminal of a switch S5 formed by an N-channel MOSFET. The source terminal of the switch S5 is connected to the ground line. The gate terminal of the switch S5 is connected to the MCU 101, the anode of a diode D4, and the enable terminal EN of the step-up DC/DC converter 201. The cathode of the diode D4 is connected to a flip-flop (not shown) that outputs a low-level signal when the temperature of the heater HTR becomes excessive, for example. One end of a resistor R4 is connected to the output terminal of the operational amplifier OP1. The other end of the resistor R4 is connected to the MCU 101.

The charging IC 102 has a charging function for charging the battery 50 on the basis of the USB voltage V_{USB} input to the input terminal VBUS. The charging IC 102 acquires the charging current and charging voltage of the battery 50 from terminals and wiring (not shown), and controls charging of the battery 50 (controls the supply of power from the charging terminal bat to the battery 50) on the basis of the charging current and charging voltage.

The charging IC 102 additionally has a V_{BAT} power pass function and an OTG function. The V_{BAT} power pass function is a function for outputting, from an output terminal SYS, a system power supply voltage Vcc0 that is substantially equal to the power supply voltage V_{BAT} input to the charging terminal bat. The OTG function is a function for outputting, from the input terminal VBUS, a system power supply voltage Vcc4 that is obtained by stepping up the power supply voltage V_{BAT} input to the charging terminal bat. The OTG function of the charging IC 102 is turned on/off under the control of the MCU 101 by serial communication using a communication line LN. In the OTG function, the power supply voltage V_{BAT} input to the charging terminal bat may be output directly from the input terminal VBUS. In this case, the power supply voltage V_{BAT} and the system power supply voltage Vcc4 are substantially equal. It should be noted that, although serial communication requires multiple signal lines, such as a data line for data transmission and a clock line for synchronization, only one signal line is shown for simplicity.

The output terminal SYS of the charging IC 102 is connected to an input terminal VIN of the step-up/step-down DC/DC converter 104. One end of a reactor La is connected to a switching terminal SW of the charging IC 102. The other end of the reactor La is connected to the output terminal SYS of the charging IC 102. A charge enable terminal CE (̅)̅ of the charging IC 102 is connected to the MCU 101 via a resistor.

A resistor is connected to the input terminal VIN and the enable terminal EN of the step-up/step-down DC/DC converter 104. When the system power supply voltage Vcc0 is input from the output terminal SYS of the charging IC 102 to the input terminal VIN of the step-up/step-down DC/DC converter 104, the level of the signal input to the enable terminal EN of the step-up/step-down DC/DC converter 104 becomes high, and the step-up/step-down DC/DC converter 104 starts a step-up operation or a step-down operation. The step-up/step-down DC/DC converter 104 generates a system power supply voltage Vcc1 by stepping up or stepping down the system power supply voltage Vcc0 input to the input terminal VIN, by performing switching control of a built-in transistor connected to the reactor Lb, and outputs the system power supply voltage Vcc1 from an output terminal VOUT. The output terminal VOUT of the step-up/step-down DC/DC converter 104 is connected to a feedback terminal FB of the step-up/step-down DC/DC converter 104 and to the power supply terminal VDD of the MCU 101. The wiring through which the system power supply voltage Vcc1 output from the output terminal VOUT of the step-up/step-down DC/DC converter 104 is supplied is shown as a power supply line PL1. The positive power supply terminal of the operational amplifier OP1 is connected to the power supply line PL1.

### Connection of MCU board 100 and USB connector board 200

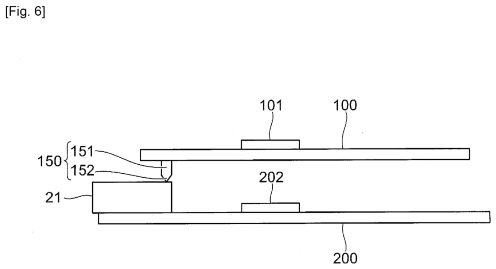

Fig. 6 is a diagram showing a first connection example of the connection between the MCU board 100 and the USB connector board 200.

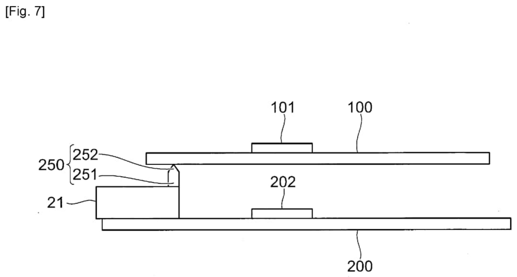

Fig. 7 is a diagram showing a second connection example of the connection between the MCU board 100 and the USB connector board 200.
Fig. 6 and 7 are diagrams showing enlargements, rotated 90° clockwise, of the part of the internal configuration of the main body device 20 shown in fig. 4 including the MCU board 100 and the USB connector board 200.

In fig. 6 and 7, the MCU board 100 and the USB connector board 200 are arranged facing each other. The MCU 101 is mounted on the MCU board 100. The USB connector 21 and the protection IC 202 are mounted on the USB connector board 200. The exterior of the USB connector 21 is connected by soldering, for example, to the ground of the USB connector board 200, and is at ground potential. It should be noted that the electronic components shown in fig. 5 other than the MCU 101, the USB connector 21 and the protection IC 202, are also mounted on the MCU board 100 and the USB connector board 200, but these are omitted from the drawing.

In fig. 6, an electrically-conductive member 150 is provided between the MCU board 100 and the USB connector board 200. The electrically-conductive member 150 is a member for connecting ground of the MCU board 100 and ground of the USB connector board 200. In fig. 6, the electrically-conductive member 150 is connected by soldering, for example, to the MCU board 100.

The electrically-conductive member 150 has an elastically deformable part. It will be assumed here that a tip-end part 152 of the electrically-conductive member 150 on the opposite side to a connecting part 151 which connects to the MCU board 100 is elastically deformable. That is to say, the tip-end part 152 of the electrically-conductive member 150 has greater elastic deformability than the connecting part 151 of the electrically-conductive member 150, with the tip-end part 152 deforming so as to contract as a result of being pressed from the MCU board 100 side to the USB connector board 200 side. When the MCU board 100 and the USB connector board 200 are connected by the electrically-conductive member 150 having the elastically deformable part, the connection is thus stronger because the contact area is larger than when the connection is made by a lead wire. Furthermore, the electrically-conductive member 150 having the elastically deformable part is also capable of absorbing slight size differences in the distance between the MCU board 100 and the USB connector board 200 when they are mounted, therefore allowing these boards to be securely connected by application of pressure. More specifically, the electrically-conductive member 150 and a contact point with the electrically-conductive member 150 provided on the USB connector board 200 can be securely connected, enabling a secure connection between ground of the MCU board 100 and ground of the USB connector board 200. Using the electrically-conductive member 150 having the elastically deformable part also has the advantage of enabling the MCU board 100 and the USB connector board 200 to be spaced apart more reliably than when a lead wire is used.

In fig. 6 in particular, the electrically-conductive member 150 contacts the exterior of the USB connector 21. The electrically-conductive member 150 may contact any position on the exterior of the USB connector 21, but in fig. 6 it contacts the face of the exterior of the USB connector 21 which faces the MCU board 100. Since the exterior of the USB connector 21 has a large area, a connection with ground of the MCU board 100 can still be easily made without setting aside a separate ground region for a connecting contact on the USB connector board 200 Furthermore, the electrically-conductive member 150 preferably contacts an electronic component among those mounted on the USB connector board 200 which extends to a greater height than other electronic components. The electrically-conductive member 150 more preferably contacts the electronic component extending to the greatest height among those mounted on the USB connector board 200. The "height" as referred to here is the width of the electronic component in a direction toward the MCU board 100 from the face of the USB connector board 200 which faces the MCU board 100. In fig. 6 in particular, the electrically-conductive member 150 contacts the exterior of the USB connector 21 which extends to the greatest height among the electronic components mounted on the USB connector board 200. By adopting such a configuration, it is possible to reduce the height of the electrically-conductive member 150, i.e., to shorten the distance from the MCU board 100 to the contact point.

It should be noted that fig. 6 shows a case in which the MCU board 100 and the USB connector board 200 are connected by a single electrically-conductive member 150, but the MCU board 100 and the USB connector board 200 may equally be connected by a plurality of electrically-conductive members 150.

Meanwhile, in fig. 7, an electrically-conductive member 250 is provided between the MCU board 100 and the USB connector board 200. The electrically-conductive member 250 is a member for connecting ground of the MCU board 100 and ground of the USB connector board 200. In fig. 7, the electrically-conductive member 250 is connected by soldering, for example, to the exterior of the USB connector 21 on the USB connector board 200.

The electrically-conductive member 250 also has an elastically deformable part. It will be assumed here that a tip-end part 252 of the electrically-conductive member 250 on the opposite side to a connecting part 251 which connects to the USB connector 21 is elastically deformable. That is to say, the tip-end part 252 of the electrically-conductive member 250 has greater elastic deformability than the connecting part 251 of the electrically-conductive member 250, with the tip-end part 252 deforming so as to contract as a result of being pressed from the USB connector board 200 side to the MCU board 100 side. When the MCU board 100 and the USB connector board 200 are connected by the electrically-conductive member 250 having the elastically deformable part, the connection is thus stronger because the contact area is larger than when the connection is made by a lead wire. Furthermore, the electrically-conductive member 250 having the elastically deformable part is also capable of absorbing slight size differences in the distance between the MCU board 100 and the USB connector board 200 when they are mounted, therefore allowing these boards to be securely connected by application of pressure. Using the electrically-conductive member 250 having the elastically deformable part also has the advantage of enabling the MCU board 100 and the USB connector board 200 to be spaced apart more reliably than when a lead wire is used.

It should be noted that fig. 7 shows the electrically-conductive member 250 mounted on the exterior of the USB connector 21 of the USB connector board 200, but the electrically-conductive member 250 may equally be mounted on a region of the USB connector board 200 other than the USB connector 21.
Furthermore, fig. 7 shows a case in which the MCU board 100 and the USB connector board 200 are connected by a single electrically-conductive member 250, but the MCU board 100 and the USB connector board 200 may equally be connected by a plurality of electrically-conductive members 250.

Moreover, fig. 6 and 7 show examples in which the electrically-conductive members 150, 250 comprise the elastically deformable part, but this is not limiting. The MCU board 100 or the USB connector board 200 may equally comprise the elastically deformable part. That is to say, at least one among the electrically-conductive members 150, 250, the MCU board 100, and the USB connector board 200 should comprise the elastically deformable part.

A situation in which the MCU board 100 and the USB connector board 200 are connected in the manner shown in fig. 6 will be described as an example below.

### Coupling of MCU board 100 and USB connector board 200

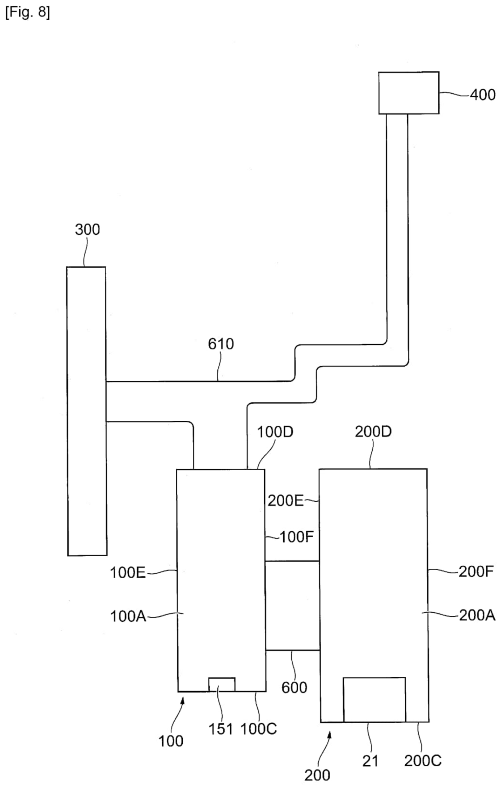

Fig. 8 is a diagram in which a coupling example of coupling between the MCU board 100 and the USB connector board 200, etc. is viewed from a main face side. Fig. 8 then shows a main face 100A for the MCU board 100, and shows a main face 200A for the USB connector board 200.

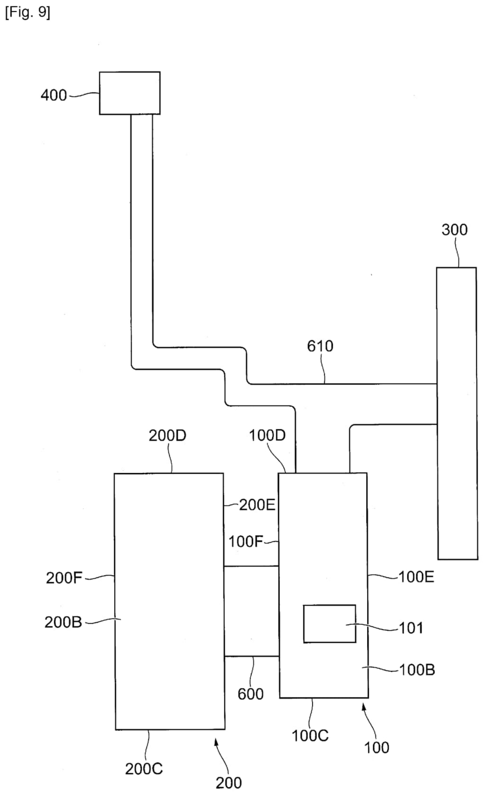

Fig. 9 is a diagram in which a coupling example of coupling between the MCU board 100 and the USB connector board 200, etc. is viewed from a secondary face side. Fig. 9 then shows a secondary face 100B for the MCU board 100, and shows a secondary face 200B for the USB connector board 200.

In fig. 8 and 9, the MCU board 100 and the USB connector board 200 are coupled by a coupling member 600. The coupling member 600 is formed by a flexible material capable of bending.
The MCU board 100 will be assumed here to have a shape comprising short sides 100C, 100D, and long sides 100E, 100F. Furthermore, the USB connector board 200 will be assumed to have a shape comprising short sides 200C, 200D, and long sides 200E, 200F. In this case, the coupling member 600 is connected to the long side 100F of the MCU board 100 and to the long side 200E of the USB connector board 200. That is to say, the coupling member 600 is connected to one end portion on the long side of the MCU board 100 and to one end portion on the long side of the USB connector board 200. When the coupling member 600 is connected to the long sides of the MCU board 100 and the USB connector board 200 in this way, the MCU board 100 and the USB connector board 200 can be placed facing each other more easily (positioned more easily) than when the coupling member 600 is connected to the short sides of the MCU board 100 and the USB connector board 200.

However, the coupling member 600 does not necessarily have to be connected to the long side of the MCU board 100 and to the long side of the USB connector board 200. For example, the coupling member 600 may equally be connected to a short side of the MCU board 100 and to a short side of the USB connector board 200. Alternatively, the coupling member 600 may equally be connected to a long side of the MCU board 100 and to a short side of the USB connector board 200, or may be connected to a short side of the MCU board 100 and to a long side of the USB connector board 200. That is to say, the coupling member 600 may be connected to one end portion of the MCU board 100 and to one end portion of the USB connector board 200. When the coupling member 600 is connected only to the end portions on one side of the MCU board 100 and the USB connector board 200 in this way, the coupling member 600 can be produced in such a way that it is bent to cause the MCU board 100 and the USB connector board 200 to face each other, as opposed to when it is connected to the end portions on both sides of the MCU board 100 and the USB connector board 200. Furthermore, by configuring the coupling member 600 so that it is connected only to the end portions on one side of the MCU board 100 and the USB connector board 200, the distance between the MCU board 100 and the USB connector board 200 can be defined by the width of the coupling member. This allows the electrically-conductive member 150, 250 to make contact at a suitable position when the coupling member 600 is bent to cause the MCU board 100 and the USB connector board 200 to face each other.

Furthermore, in fig. 8 and 9, the MCU board 100 is also coupled by a coupling member 610 to the LED board 300 and to the Hall IC board 400.

### Facing arrangement of MCU board 100 and USB connector board 200

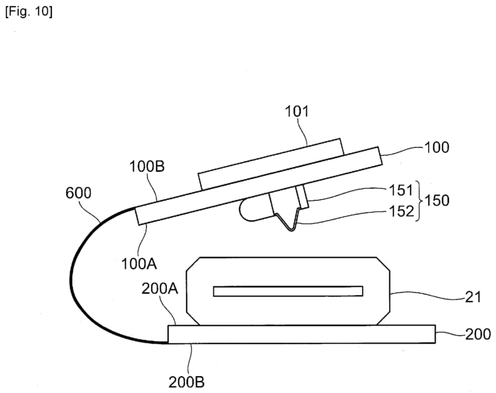

Fig. 10 is a diagram showing a first state example when the MCU board 100 and the USB connector board 200 are arranged facing each other.

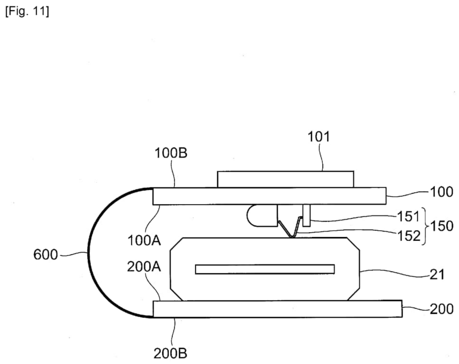

Fig. 11 is a diagram showing a second state example when the MCU board 100 and the USB connector board 200 are arranged facing each other.
Fig. 10 and 11 are diagrams in which the part including the MCU board 100 and the USB connector board 200 shown in fig. 6 is viewed from the left hand side of fig. 6 with the vertical arrangement maintained.

In fig. 10 and 11, the coupling member 600 which was not visible in fig. 6, being hidden behind, is shown at the left hand side of the MCU board 100 and the USB connector board 200.
The coupling member 600 couples the secondary face 100B of the MCU board 100 on the opposite side to the main face 100A on which the electrically-conductive member 150 is provided, and the secondary face 200B of the USB connector board 200 on the opposite side to the main face 200A on which the USB connector 21 is mounted.

This is not limiting, however, and the coupling member 600 may equally couple the main face 100A of the MCU board 100 on which the electrically-conductive member 150 is provided, and the main face 200A of the USB connector board 200 on which the USB connector 21 is mounted or the secondary face 200B on the opposite side. Alternatively, the coupling member 600 may equally couple the main face 100A of the MCU board 100 on which the electrically-conductive member 150 is provided or the secondary face 100B on the opposite side, and the main face 200A of the USB connector board 200 on which the USB connector 21 is mounted.

In fig. 10 and 11, the coupling member 600 is bent and positioned at a location such that the MCU board 100 and the USB connector board 200 are roughly facing each other. That is to say, the coupling member 600 for coupling the MCU board 100 and the USB connector board 200 is bent so that the electrically-conductive member 150 of the MCU board 100 and the USB connector 21 of the USB connector board 200 are facing each other.

Fig. 10 shows a state in which the electrically-conductive member 150 is not being pressed against the USB connector 21. In this state, the tip end portion 152 of the electrically-conductive member 150 does not deform.
Fig. 11 shows a state in which the electrically-conductive member 150 is pressed against the USB connector 21. In this state, the tip end portion 152 of the electrically-conductive member 150 deforms so as to contract as a result of being pressed. That is to say, the electrically-conductive member 150 is mounted on the MCU board 100, which is assembled so as to face the USB connector board 200 on which the USB connector 21 is mounted, whereby the electrically-conductive member 150 contacts the exterior of the USB connector 21 and the grounds are connected.

### Arrangement of electronic components on USB connector board 200

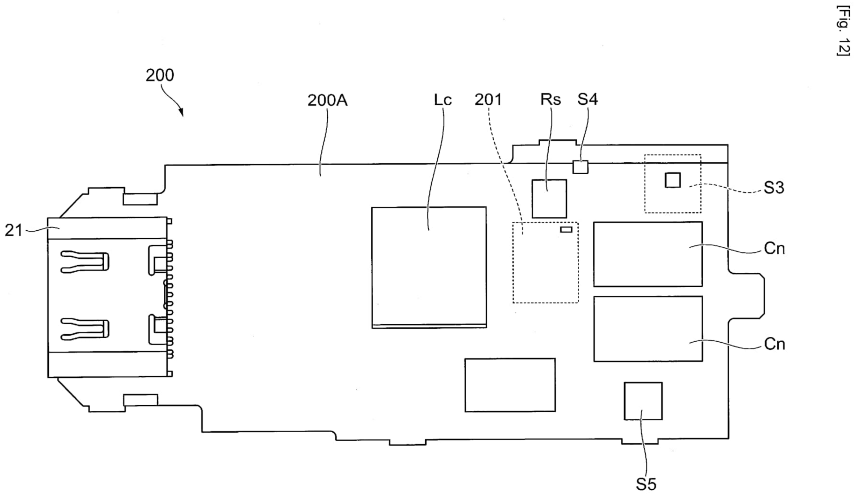

Fig. 12 is a diagram in which the USB connector board 200 is viewed from the main face 200A side.

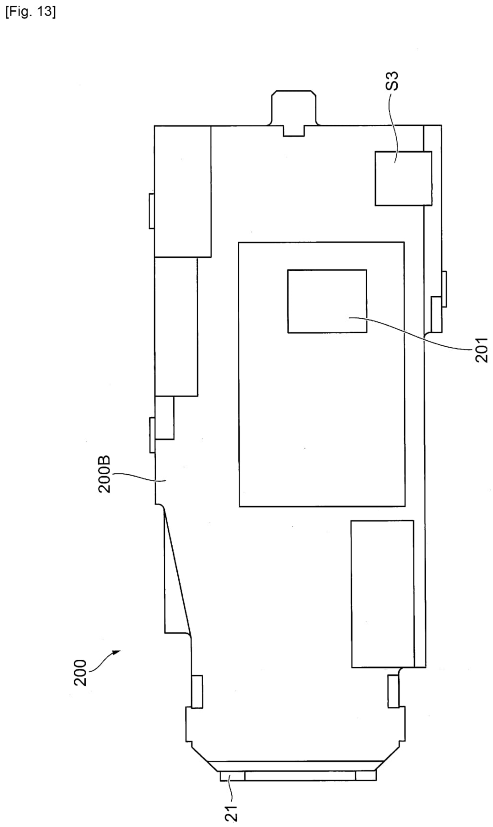

Fig. 13 is a diagram in which the USB connector board 200 is viewed from the secondary face 200B side.

As shown in fig. 12, among the electronic components shown in fig. 5, the reactor Lc, the resistor Rs, the switch S4, the switch S5, and the heater connectors Cn are provided on the main face 200A of the USB connector board 200. As shown in fig. 13, among the electronic components shown in fig. 5, the step-up DC/DC converter 201 and the switch S3 are provided on the secondary face 200B of the USB connector board 200.

That is to say, on the USB connector board 200, the USB connector 21 is mounted in a region on one end portion side, and the heater connectors Cn for connecting the heater unit 40 (see fig. 4) are mounted in a region on the other end portion side. As can be seen from the drawing, a circuit associated with control of heating performed by the heater unit 40 is then mounted in a region of the USB connector board 200 closer to the heater connectors Cn than to the USB connector 21. Here, the circuit associated with control of heating performed by the heater unit 40 may include a power source for heating by the heater unit 40, and switches. The power source for heating by the heater unit 40 may be the step-up DC/DC converter 201, for example. Furthermore, the switches may be the switches S3, S4 and S5, for example.

The circuit associated with control of heating performed by the heater unit 40 is thus mounted in a region close to the heater connectors Cn, thereby improving heating efficiency. Furthermore, the USB connector 21 is susceptible to static electricity, and there is a possibility that any static electricity applied to signals for controlling the heater unit 40, etc. will affect heating control, etc. For this reason, the heater connectors Cn and the circuit associated with control of heating performed by the heater unit 40 are arranged at a different end of the USB connector board 200 to the USB connector 21. That is to say, static electricity is less likely to be applied to heating control signals, etc. by using the position of the USB connector 21 as a measure against static electricity.

### ADVANTAGEOUS EFFECTS

In the aerosol-generating device 1 according to the embodiment, at least one of the MCU board 100, the USB connector board 200, and the electrically-conductive member 150 or the electrically-conductive member 250 for connecting ground of the MCU board 100 and ground of the USB connector board 200, comprises an elastically deformable part. As a result, the embodiment makes it possible to strengthen the connection between the ground of the MCU board 100 and the ground of the USB connector board 200. Furthermore, the embodiment also allows the assembly obtained by arranging the MCU board 100 and the USB connector board 200 facing each other to be produced more simply than when a lead wire is used.

### Other embodiments

(1) Embodiments of the present disclosure were described above, but the technical scope of the present disclosure is not limited to the scope disclosed in the embodiments above. It will be obvious from the disclosure of the claims that the technical scope of the present disclosure also includes various modifications or improvements made to the embodiment above.
(2) The embodiment above described a case in which the aerosol source is a solid, but the aerosol source may equally be a liquid. When the aerosol source is a liquid, a system is adopted in which the aerosol source is guided to a narrow tube known as a wick by using the capillary phenomenon, and a coil wound around the wick is heated to thereby vaporize the aerosol source.
(3) The embodiment above described an aerosol-generating device which generates an aerosol by heating a solid aerosol source, but the aerosol-generating device may equally generate an aerosol by separately heating each of a solid aerosol source and a liquid aerosol source. An aerosol-generating device of this type is also referred to as a hybrid aerosol-generating device.

### SUMMARY

It should be noted that the present disclosure includes the following features.
(1) An aerosol-generating device comprising: a heating unit for heating a substrate containing an aerosol source; a first board connected to the heating unit; a control unit for controlling heating by the heating unit; a second board arranged facing the first board and having the control unit mounted thereon; and an electrically-conductive member which is provided between the first board and the second board and serves for connecting a ground of the first board with a ground of the second board, wherein at least one of the first board, the second board and the electrically-conductive member comprises an elastically deformable part.
(2) The aerosol-generating device as disclosed in (1), wherein the electrically-conductive member comprises the elastically deformable part.
(3) The aerosol-generating device as disclosed in (2), wherein a tip-end part of the electrically-conductive member has greater elastic deformability than a part of the electrically-conductive member on a side connected to the first board or to the second board, and deforms so as to contract as a result of being pressed.
(4) The aerosol-generating device as disclosed in (1), wherein the electrically-conductive member is provided on the first board.
(5) The aerosol-generating device as disclosed in (1), wherein the electrically-conductive member is provided on the second board.
(6) The aerosol-generating device as disclosed in (5), wherein the first board has a receptacle mounted thereon, a plug being inserted into the receptacle, and an exterior of the receptacle is connected to the ground of the first board.
(7) The aerosol-generating device as disclosed in (6), wherein the receptacle is a USB connector.
(8) The aerosol-generating device as disclosed in (7), wherein the electrically-conductive member contacts the exterior of the USB connector.
(9) The aerosol-generating device as disclosed in (8), wherein the electrically-conductive member contacts a face of the exterior of the USB connector which faces the second board.
(10) The aerosol-generating device as disclosed in (7), comprising a coupling member which couples the first board and the second board, and is bent so that the USB connector on the first board faces the electrically-conductive member on the second board.
(11) The aerosol-generating device as disclosed in (10), wherein the coupling member couples a face of the first board on the opposite side to the face on which the USB connector is mounted, and a face of the second board on the opposite side to the face on which the electrically-conductive member is provided.
(12) The aerosol-generating device as disclosed in (10), wherein the coupling member is connected to one end portion of the first board and to one end portion of the second board.
(13) The aerosol-generating device as disclosed in (12), wherein the first board has a shape including a long side and a short side, and the second board has a shape including a long side and a short side, and said one end portion of the first board constitutes one end portion on the long side of the first board, and said one end portion of the second board constitutes one end portion on the long side of the second board.
(14) The aerosol-generating device as disclosed in (7), wherein, on the first board, the USB connector is mounted in a region on said one end portion side, a heater connector for connecting the heating unit is mounted in a region on said other end portion side, and a circuit associated with control of heating performed by the heating unit is mounted in a region closer to the heater connector than to the USB connector.
(15) The aerosol-generating device as disclosed in (14), wherein the circuit associated with control of heating performed by the heating unit comprises a power source for heating by the heating unit, and a switch.

### REFERENCE SIGNS LIST

1... Aerosol-generating device, 10... Front panel, 20... Main body device, 21... USB connector, 22... Insertion hole, 24... LED, 30... Shutter, 40... Heater unit, 50... Battery, 60... Vibrator, 100... MCU board, 101... MCU, 150... Electrically-conductive member, 200... USB connector board, 250... Electrically-conductive member, 300... LED board, 400... Hall IC board, 500... Chassis, 600... Coupling member

## Claims

1. An aerosol-generating device comprising: a heating unit for heating a substrate containing an aerosol source;
a first board connected to the heating unit;
a control unit for controlling heating by the heating unit;
a second board arranged facing the first board and having the control unit mounted thereon; and
an electrically-conductive member which is provided between the first board and the second board and serves for connecting a ground of the first board with a ground of the second board,
wherein
at least one of the first board, the second board and the electrically-conductive member comprises an elastically deformable part.

2. The aerosol-generating device as claimed in claim 1, wherein the electrically-conductive member comprises the elastically deformable part.

3. The aerosol-generating device as claimed in claim 2, wherein a tip-end part of the electrically-conductive member has greater elastic deformability than a part of the electrically-conductive member on a side connected to the first board or to the second board, and deforms so as to contract as a result of being pressed.

4. The aerosol-generating device as claimed in claim 1, wherein the electrically-conductive member is provided on the first board.

5. The aerosol-generating device as claimed in claim 1, wherein the electrically-conductive member is provided on the second board.

6. The aerosol-generating device as claimed in claim 5, wherein the first board has a receptacle mounted thereon, a plug being inserted into the receptacle, and
an exterior of the receptacle is connected to the ground of the first board.

7. The aerosol-generating device as claimed in claim 6, wherein the receptacle is a USB connector.

8. The aerosol-generating device as claimed in claim 7, wherein the electrically-conductive member contacts the exterior of the USB connector.

9. The aerosol-generating device as claimed in claim 8, wherein the electrically-conductive member contacts a face of the exterior of the USB connector which faces the second board.

10. The aerosol-generating device as claimed in claim 7, comprising a coupling member which couples the first board and the second board, and is bent so that the USB connector on the first board faces the electrically-conductive member on the second board.

11. The aerosol-generating device as claimed in claim 10, wherein the coupling member couples a face of the first board on the opposite side to the face on which the USB connector is mounted, and a face of the second board on the opposite side to the face on which the electrically-conductive member is provided.

12. The aerosol-generating device as claimed in claim 10, wherein the coupling member is connected to one end portion of the first board and to one end portion of the second board.

13. The aerosol-generating device as claimed in claim 12, wherein the first board has a shape including a long side and a short side, and the second board has a shape including a long side and a short side, and
said one end portion of the first board constitutes one end portion on the long side of the first board, and said one end portion of the second board constitutes one end portion on the long side of the second board.

14. The aerosol-generating device as claimed in claim 7, wherein, on the first board, the USB connector is mounted in a region on said one end portion side, a heater connector for connecting the heating unit is mounted in a region on said other end portion side, and a circuit associated with control of heating performed by the heating unit is mounted in a region closer to the heater connector than to the USB connector.

15. The aerosol-generating device as claimed in claim 14, wherein the circuit associated with control of heating performed by the heating unit comprises a power source for heating by the heating unit, and a switch.
